**Europäisches Patentamt**

**European Patent Office**

**Office européen des brevets**

(11) Veröffentlichungsnummer: **0 126 213**
**A2**

(12) **EUROPÄISCHE PATENTANMELDUNG**

(21) Anmeldenummer: 84101416.0

(22) Anmeldetag: 11.02.84

(51) Int. Cl.³: **B 01 D 29/34**, B 01 D 33/26

(30) Priorität: 20.05.83 DE 3318437

(43) Veröffentlichungstag der Anmeldung: 28.11.84
Patentblatt 84/48

(84) Benannte Vertragsstaaten: **AT BE CH DE FR GB IT LI LU NL SE**

(71) Anmelder: **Uhde GmbH, Friedrich-Uhde-Strasse 15, D-4600 Dortmund 1 (DE)**

(72) Erfinder: **Körner, Jörg Peter, Dipl.-Ing., Baurothstrasse 7, D-5800 Hagen 1 (DE)**
Erfinder: **Koll, Gregor, Dipl.-Ing., Auf dem Birnbaum 25, D-5800 Hagen 1 (DE)**
Erfinder: **Saamer, Peter, Dipl.-Ing., Letteweg 36, D-5860 Iserlohn-Hennen (DE)**

(74) Vertreter: **Patentanwälte Meinke und Dabringhaus Dipl.-Ing. J. Meinke Dipl.-Ing. W. Dabringhaus, Westenhellweg 67, D-4600 Dortmund 1 (DE)**

(54) **Welle zur Bildung eines Filterpaketes eines Druckrotationsfilters.**

(57) Bei einer Welle (2) zur Bildung eines Filterpaketes eines Druckrotationsfilters (1) mit einer Mehrzahl von an Wellenscheiben (3) angeordneten Filterscheiben soll eine Lösung geschaffen werden, mit der die Welle den unterschiedlichen Einbausituationen gerecht werden kann, ohne daß jeweils die Gesamtwellenlänge als Einzelbauteil vorliegen muß. Dies wird dadurch erreicht, daß die Wellenscheiben (3) zur Bildung der Welle (2) als Ringscheiben mit einer Mehrzahl über den Umfang verteilten Durchgangsbohrungen (15) und mit einer Mehrzahl von Gewindebohrungen (16) sowie einer zentralen Durchgangsbohrung (5) ausgerüstet sind.

0126213

"Welle zur Bildung eines Filterpaketes eines Druckrotationsfilters"

Die Erfindung richtet sich auf eine Welle zur Bildung eines Filterpaketes eines Druckrotationsfilters mit einer Mehrzahl von an Wellenscheiben angeordneten Filterscheiben.

Es ist bekannt, die Filterscheiben von Rotationsfiltern an ringförmigen Wellenscheiben anzuordnen, so z.B. DE-A-1 943 152 oder DE-C-1 090 639. Bei der oben angegebenen ersteren Lösung werden die Filterscheiben an Nabenteilen angeordnet, die über Distanzringe voneinander getrennt sind. Die Lösung nach der zweiten Literaturstelle ist entsprechend. Bei beiden Fällen werden die Nabenelemente und die Distanzringe über ein gelochtes Zentralrohr, an dem ein Gewinde angebracht ist, mittels Verschraubungen zusammengespannt.

Diese bekannten Lösungen sind sehr aufwendig in der Konstruktion. Man benötigt immer mehrere Elemente, so insbesondere das zur Verspannung dienende zentrale Rohr, das zusätzlich gelocht sein muß, um das gefilterte Medium aus dem Zentralbereich des Filterpaketes abführen zu können.

Nachteilig ist bei den bekannten Lösungen auch, daß aufwendige Lagerkonstruktionen vorgesehen sein müssen, da die Lagerung dieser Wellen besonderen Anforderungen gewachsen sein muß.

Die bekannten Lösungen sehen in der Regel den einheitlichen Wellenbereich größerer Abmessung als Einbauteil vor, während der Wellenanfang und das Wellenende den entsprechenden Lagerbedingungen angepaßt als Sonderbauteile gefertigt sind. So können dann mit derartigen Lagerelementen Wellen unterschiedlicher Länge gelagert werden. Die Welle selbst bzw. das zentrale Lochrohr muß aber den jeweiligen Einbaubedingungen angepaßt sein.

Aufgabe der Erfindung ist die Schaffung einer Lösung, mit der die Welle den unterschiedlichen Einbausituationen gerecht werden kann, ohne daß jeweils die Gesamtwellenlänge als Einzelbauteil vorliegen muß.

Bei einer Welle der eingangs bezeichneten Art wird diese Aufgabe gemäß der Erfindung dadurch gelöst, daß die Wellenscheiben zur Bildung der Welle als Ringscheiben mit einer Mehrzahl über den Umfang verteilter Durchgangsbohrungen und mit einer Mehrzahl von Gewindebohrungen sowie einer zentralen Durchgangsbohrung ausgerüstet sind.

Durch die Erfindung wird zum einen die Anpassungsmöglichkeit an unterschiedliche Einbausituationen in einfacher Weise möglich. Gleichzeitig wird ein zentrales Lochrohr

- 3 -  012 62 13

völlig entbehrlich gemacht und die damit verbundenen Nachteile vermieden.

Grundsätzlich sind aus Scheiben zusammengesetzte Wellen,
nämlich Gewindespindeln, bekannt, bei denen benachbarte
Elemente jeweils durch Verschraubungen miteinander im
Wechsel verbunden sind, wie dies die DE-C-930 605 zeigt.
Die dort bekanntgewordene Konstruktion ist aber für das
hier vorgesehene Einsatzgebiet nicht geeignet, sie verfügt
über keinerlei Bohrungen o. dgl., durch die etwa ein Filtermedium abgezogen werden kann.

Die Übernahme der Verbindungstechnik bei der bekannten
Gewindespindel ist grundsätzlich für eine Welle zur Bildung eines Filterpaketes ohne weiteres nicht möglich, wie
die anderen älteren Lösungen zeigen. Dies liegt insbesondere daran, daß man zunächst Sorge haben mußte, daß die
Wellenscheiben durch die Vielzahl von Bohrungen die zuzumutenden Belastungen nicht aufnehmen konnten. Durch die
Erfindung ist aber die entsprechende Lösung möglich geworden.

In Ausgestaltung sieht die Erfindung vor, daß jede Wellenscheibe auf der einen Seite mit einem Zentrierflansch und
auf der anderen Seite mit einer Zentrierausnehmung zur Aufnahme des Zentrierflansches einer benachbarten Wellenscheibe versehen ist.

- 4 -

0126213.

Wesentlich für die Erfindung ist einmal, dass die Welle aus zu Paketen zusammengefaßten einzelnen Wellenscheiben gebildet ist, wobei Schrauben die äußere Durchgangsbohrung wenigstens einer benachbarten Scheibe durchsetzen und in einer Gewindebohrung einer weiteren Scheibe festgelegt sind. Diese Paketbildung vereinfacht zum einen die Montage und zum anderen auch die Lagerhaltung, sie führt aber insbesondere zur Vergrößerung der Widerstandsfähigkeit der Gesamtkonstruktion gegenüber den auftretenden Belastungen.

Die beanspruchte Bauweise der Welle macht es möglich, daß auch die Lagerelemente vereinfacht werden können. Hierzu sieht die Erfindung vor, daß die erste und letzte Wellenscheibe mit je einem Wellenzapfen versehen sind.

Neben den Axialbohrungen sind, wie an sich bekannt, in den Wellenscheiben auch Radialbohrungen vorgesehen. Zweckmäßig sind auch zwischen den Wellenscheiben Dichtringe angeordnet, wie dies in weiterer Ausgestaltung die Erfindung ebenfalls vorsieht. Diese Dichtringe gewährleisten insbesondere bei einem Druckrotationsfilter einen definierten Druckverlauf, d.h. damit eine definierte Förderrichtung des zu filternden Mediums von außerhalb der Dichtscheibe in deren Hohlraum und von dort durch die Radialbohrungen in das Innere der Welle und von dort nach außerhalb des Filtergehäuses.

Die Erfindung ist nachstehend anhand der Zeichnung beispielsweise näher erläutert. Diese zeigt in

Fig. 1 einen Schnitt durch ein Ausführungsbeispiel der Welle mit beiden Lagerenden in vereinfachter Darstellung,

Fig. 2 einen mittleren Wellenbereich im Schnitt mit Filterscheiben in einer Darstellung, die zur Gebrauchslage um 90° gedreht ist, sowie in

Fig. 3 eine Aufsicht gemäß Pfeil III in Fig. 1 auf einen Teil einer Wellenscheibe.

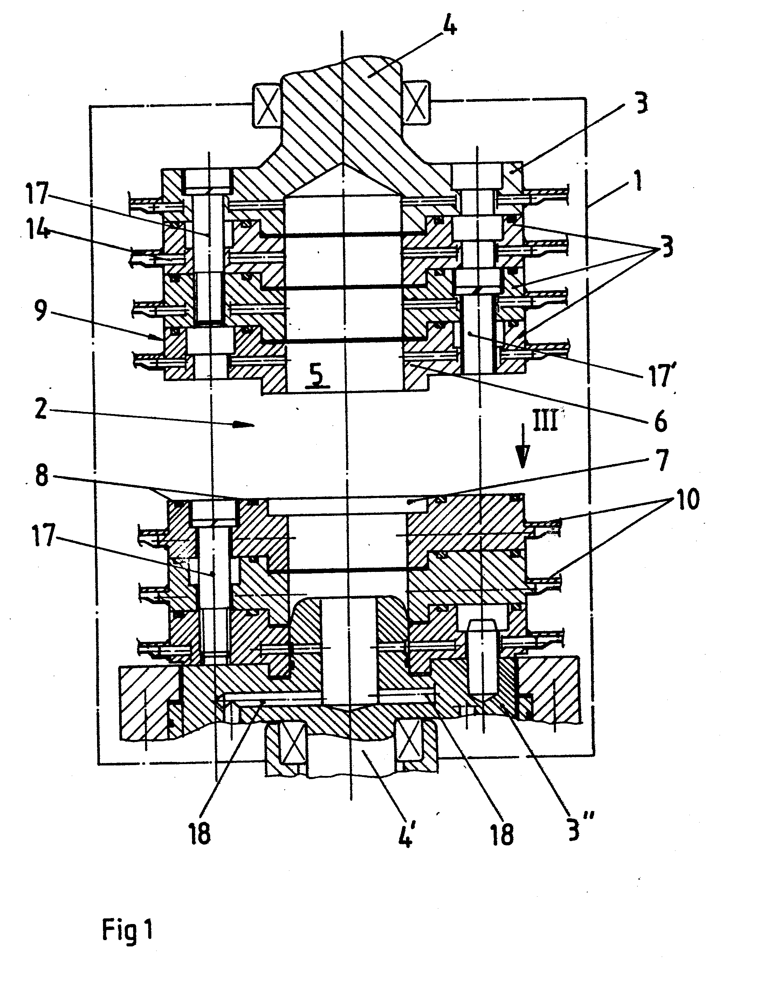

In einem in Fig. 1 lediglich strichpunktiert angedeuteten Druckgefäß 1 ist drehbar die Welle 2 gelagert.

Die Welle 2 besteht aus einer Mehrzahl von Wellenscheiben 3, die als Ringscheiben ausgebildet sind und bis auf die obere, erste Wellenscheibe 3´ und die untere, letzte Wellenscheibe 3" gleiche Gestaltung aufweisen. Sowohl die obere Wellenscheibe 3´ als auch die untere Wellenscheibe 3" sind mit Lagerzapfen 4 bzw. 4´ ausgerüstet und gelagert, was lediglich symbolisch dargestellt ist.

Jede Wellenscheibe 3 weist u.a. eine zentrische Durchgangsbohrung 5 auf. Auf einer Seite ist sie mit einem Zentrierflansch 6 versehen, auf der anderen Seite mit einer Zentrierausnehmung 7, die konzentrisch zur Durchgangsbohrung 5 angeordnet ist, wie sich dies aus Fig. 1 ergibt. Mit dem Zentrierflansch 6 einer Scheibe kann diese in die Zentrierausnehmung 7 der nächsten Wellenscheibe eingreifen und wird dort zentriert.

Wenigstens auf einer Seite jeder Wellenscheibe ist diese mit konzentrisch zur Durchgangsbohrung 5 angeordneten Ringdichtungen 8 ausgerüstet.

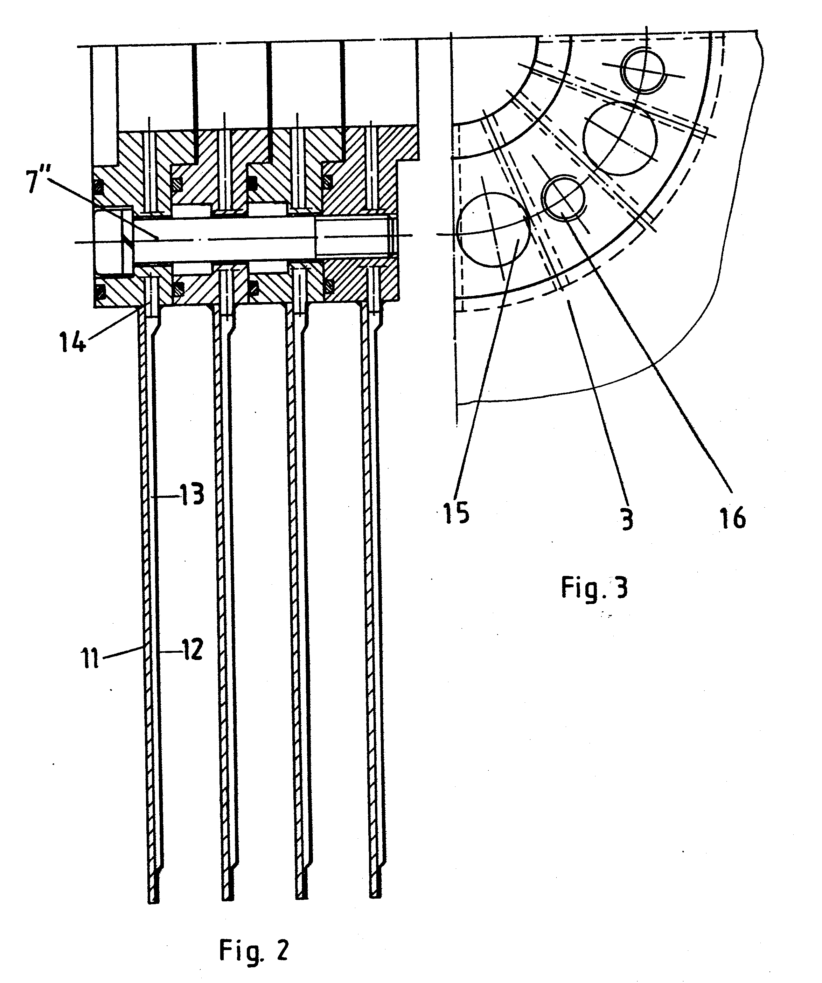

An der äußeren Kreisringfläche 9 jeder Wellenscheibe 3 sind im dargestellten Beispiel randseitig Filterscheiben 10 befestigt, wie sich dies besonders gut aus Fig. 2 ergibt. Diese Filterscheiben bestehen auf einer Seite aus einem den Durchgang eines Fluids ermöglichenden Material, z.B. einer Sinterplatte 1, und auf der anderen Seite aus einem fluiddichten Material, z.B. einer Metallscheibe 12, die zwischen sich einen Hohlraum 13 bilden. Vom Hohlraum 13 führen Radialbohrungen 14 in die Durchgangsbohrung 5.

Wie sich insbesondere auch in Verbindung mit Fig. 3 ergibt, sind in jeder Wellenscheibe 3 abwechselnd zur zentrischen Durchgangsbohrung weiter außen liegende koaxiale Durchgangsbohrungen 15 und Gewindebohrungen 16 vorgesehen.

Im dargestellten Beispiel sind in einer Ringscheibe je acht äußere Durchgangsbohrungen und dazwischen je acht Gewindebohrungen vorgesehen, wobei die Erfindung allerdings nicht auf diese Anzahl beschränkt ist.

Beim Zusammenbau werden z.B. je drei Wellenscheiben zu einem Paket zusammengefaßt und von einer Mehrzahl von Befestigungsschrauben 17 (Fig. 1) paketweise zusammengefaßt. Jeweils versetzt greift dann eine nächste Befestigungsschraube 17ʹ (Fig. 1, rechte Figurenhälfte) in ein weiter darunterliegendes Paket ein und legt so einzelne Wellenscheibenpakete aneinander fest.

In Fig. 2 ist die Möglichkeit angedeutet, daß durch eine Schraube 17ʺ vier Wellenscheiben paketweise zusammenfahrbar soll lediglich andeuten, daß die Art der Zusammenfassung je nach Einsatzgebiet und Belastung entsprechend gewählt werden kann.

In Fig. 1, untere Figurenhälfte, ist noch angedeutet, daß die letzte zur Lagerung herangezogene Wellenscheibe 3ʺ mit Dränagekanälen 18 versehen ist, aus der das gefilterte Fluid nach außen aus dem Gehäuse 1 herausführbar ist.

Natürlich ist das beschriebene Ausführungsbeispiel noch in vielfacher Hinsicht abzuändern, ohne den Grundgedanken der Erfindung zu verlassen. So ist die Erfindung insbesondere nicht auf das gewählte Einsatzgebiet beschränkt, obgleich es hier besondere Vorteile aufweist, da insbesondere Druck-rotationsfilter in verschiedenen Größen im Markt angeboten werden müssen und die Erfindung die Anpassung an unterschiedliche Baugrößen besonders stark vereinfacht.

Die Erfindung ist insbesondere auch nicht auf die gewählte Teilung der äußeren Durchgangsbohrungen und Gewindebohrungen beschränkt. Je nach Raumbedarf können diese auch nebeneinanderliegen oder auf unterschiedlichen Teilungskreisen. Auch kann die Zentrierung einzelner benachbarter Wellenscheiben zueinander in anderer Weise erfolgen. Z.B. über Zentrierstifte oder Zentrierscheiben o. dgl. mehr. Es können Kegelsitze vorgesehen sein, ebenso wie die dargestell-ten Schultern.

0126213

Ansprüche :

1. Welle (2) zur Bildung eines Filterpaketes eines Druckrotationsfilters (1) mit einer Mehrzahl von an Wellenscheiben (3) angeordneten Filterscheiben (10) ,
dadurch gekennzeichnet, daß
die Wellenscheiben (3) zur Bildung der Welle (2) als Ringscheiben mit einer Mehrzahl über den Umfang verteilten Durchgangsbohrungen (15) und mit einer Mehrzahl von Gewindebohrungen (16) sowie einer zentralen Durchgangsbohrung (5) ausgerüstet sind.

2. Welle nach Anspruch 1,
dadurch gekennzeichnet, daß
jede Wellenscheiben (3) auf der einen Seite mit einem Zentrierflansch (6) und auf der anderen Seite mit einer Zentrierausnehmung (7) zur Aufnahme des Zentrierflansches (6) einer benachbarten Wellenscheibe versehen ist.

3. Welle nach Anspruch 1 oder 2,
dadurch gekennzeichnet, daß
sie aus zu Paketen zusammengefaßten einzelnen Wellenscheiben (3) gebildet ist, wobei Schrauben (17) die äußere Durchgangsbohrung (15) wenigstens einer benachbarten Scheibe durchsetzen und in einer Gewindebohrung (16) einer weiteren Scheibe festgelegt sind.

4. Welle nach einem der vorangehenden Ansprüche,

dadurch gekennzeichnet, daß

die erste und letzte Wellenscheibe (3´,3") mit je einem Wellenzapfen (4,4´) versehen sind.

5. Welle nach einem der vorangehenden Ansprüche,

dadurch gekennzeichnet, daß

jede Wellenscheibe mit Radialbohrungen (14) zwischen der Zentralausnehmung (5) und dem von dem zugeordneten Filterscheiben gebildeten Hohlraum versehen ist.

6. Welle nach Anspruch 5,

dadurch gekennzeichnet, daß

auf wenigstens einer Seite der Wellenscheibe (3) konzentrische Dichtringe (5) zum Abdichten gegenüber einer benachbarten Wellenscheibe vorgesehen sind.

0126213

Fig 1

7"

14

13

11 12

Fig. 2

15 3 16

Fig. 3